# EUROPEAN PATENT APPLICATION

(11) **EP 4 645 108 A1**
(43) Date of publication of application: **05.11.2025**
(21) Application number: 25172682.4
(22) Date of filing: 25.04.2025
(51) Int. Cl.: G06F 16/25, G06N 20/00

(54) **ARTIFICIAL INTELLIGENCE-ASSISTED DATA MANAGEMENT FOR DIVERSE SOURCE SYSTEMS**

(30) Priority: 30.04.2024 US 202463640684 P; 25.02.2025 US 202519062184
(71) Applicant: Cohesity, Inc., San Jose, CA 95110 (US)
(72) Inventor: STATTON, Gregory, San Jose, 95110 (US); MANDAGERE, Nagapramod, San Jose, 95110 (US); BAJAJ, Rupesh, San Jose, 95110 (US)
(74) Representative: EIP

(57) **Abstract**

In an example, a method comprises generating, with a computing system-executed AI agent applying a machine learning model, based on a query associated with a user, an execution plan for a task to satisfy the query, wherein the execution plan includes actions to be performed with respect to a first data source system and a second data source system, and wherein the user has permission for each of the actions; invoking, by the AI agent, a first tool to perform a first action of the actions with respect to the first data source system, wherein the AI agent is trained to use the first tool; and invoking, by the AI agent, a second tool to perform a second action of the actions with respect to the second data source system, wherein the AI agent is trained to use the second tool.

## Description

### TECHNICAL FIELD

This disclosure relates to data management in computing systems.

### BACKGROUND

Data is commonly queried to retrieve specific information or datasets from storage systems, enabling data analysis, data recovery, data mining, forensic analysis, and compliance with regulatory requirements. Data accessible to a data management platform can be stored across multiple cloud and on-premises environments, in a variety of forms, and is accessible and can be managed using a variety of tools. Such tools can include third-party applications and orchestration tools, cloud services, and so forth. Interfaces for these tools can be integrated into the data management platform to extend and customize the data management platform to meet specific requirements.

### SUMMARY

In general, techniques for artificial intelligence (AI)-assisted data management for diverse data source systems are described. For example, an AI agent is trained to interact with a user and generate a response for a query or prompt (hereinafter, "query"). The AI agent generates the response by leveraging tools to complete tasks involving multiple diverse data source systems to satisfy the query. Queries can include requests for data, requests for operational insights or guidance, requests to configure one or more of the data source systems, or other queries. Each tool extends the capability of the AI agent to intelligently access data in a different data source system, e.g., by implementing additional protocol(s) and formulating requests that the AI agent is trained to leverage in order to autonomously (or semi-autonomously) act on behalf of the user to satisfy user queries.

The data management platform configures the tools to use the role-based access privileges of a user. Consequently, the AI agent leveraging a tool inherits the user's privileges and is thus able to interact with a data source accessed by the tool as though it is the user interacting directly with the data source.

The techniques may provide one or more technical advantages. Existing solutions that interact with data source systems and applications are time consuming to configure and use to accomplish new tasks involving the data source systems. The techniques of this disclosure may extend the capabilities of the AI agent to interact with such data source systems and applications to allow the AI agent to not only augment the user's understanding and capabilities with respect to data and applications distributed across multiple systems, but to enable that user to leverage the extensible AI agent to accomplish new tasks, generate new operational insights, and otherwise more efficiently and intelligently manage data accessible from multiple diverse systems. In other words, the AI agent can seamlessly coordinate actions across multiple data source systems using different tools, eliminating the need for manual integration between disparate systems. The AI agent may perform these actions concurrently, improving response time to the query. Furthermore, user permissions may be verified before executing actions, ensuring security compliance while automating complex cross-system workflows. The techniques may thereby improve the technical fields of data management and data analysis by improving the capabilities and performance of a specific machine, i.e., the computing system that implements the AI agent.

In an example, a method comprises: receiving, by a computing system, a query for processing by an artificial intelligence (AI) agent, the query comprising a request for performance of a task associated with a first data source system and a second data source system; generating, with the AI agent, based on the query, an execution plan for the task to satisfy the query, wherein the execution plan includes actions to be performed with respect to the first data source system and the second data source system, and wherein a user associated with the first data source system and the second data source system has permission for each of the actions; invoking, by the AI agent, a first tool to perform a first action of the actions with respect to the first data source system; and invoking, by the AI agent, a second tool to perform a second action of the actions with respect to the second data source system.

In an example, a computing system comprises one or more storage devices; and processing means having access to the one or more storage devices and configured to: receive a query for processing by an artificial intelligence (AI) agent, the query comprising a request for performance of a task associated with a first and second data source system; generate, with the AI agent, based on the query, an execution plan for the task to satisfy the query, wherein the execution plan includes actions to be performed with respect to the first data source system and the second data source system, and wherein a user associated with the first data source system and the second data source system has permission for each of the actions; invoke, by the AI agent, a first tool to perform a first action of the actions with respect to the first data source system; and invoke, by the AI agent, a second tool to perform a second action of the actions with respect to the second data source system.

In an example, one or more computer-readable media comprises instructions that, when executed by processing means, cause the processing means to: receive a query for processing by an artificial intelligence (AI) agent, the query comprising a request for performance of a task associated with a first and second data source system; generate, with the AI agent, based on the query, an execution plan for the task to satisfy the query, wherein the execution plan includes actions to be performed with respect to the first data source system and the second data source system, and wherein a user associated with the first data source system and the second data source system has permission for each of the actions; invoke, by the AI agent, a first tool to perform a first action of the actions with respect to the first data source system; and invoke, by the AI agent, a second tool to perform a second action of the actions with respect to the second data source system.

The details of one or more examples of the invention are set forth in the accompanying drawings and the description below. Other features, objects, and advantages of the invention will be apparent from the description and drawings, and from the claims.

### BRIEF DESCRIPTION OF THE DRAWINGS

FIG. 1 is a block diagram illustrating an example system for data management, in accordance with one or more aspects of the present disclosure.
FIG. 2 is a block diagram illustrating an example data management platform, in accordance with techniques of this disclosure.
FIG. 3 is a block diagram illustrating an example of a computing system that implements a data management platform, in accordance with techniques of this disclosure.
FIG. 4 is a block diagram illustrating a workflow of actions performed by an AI agent using tools, in accordance with techniques of this disclosure.
FIG. 5 is a flowchart illustrating an example mode of operation of a computing system, in accordance with one or more techniques of this disclosure.

Like reference characters denote like elements throughout the text and figures.

### DETAILED DESCRIPTION

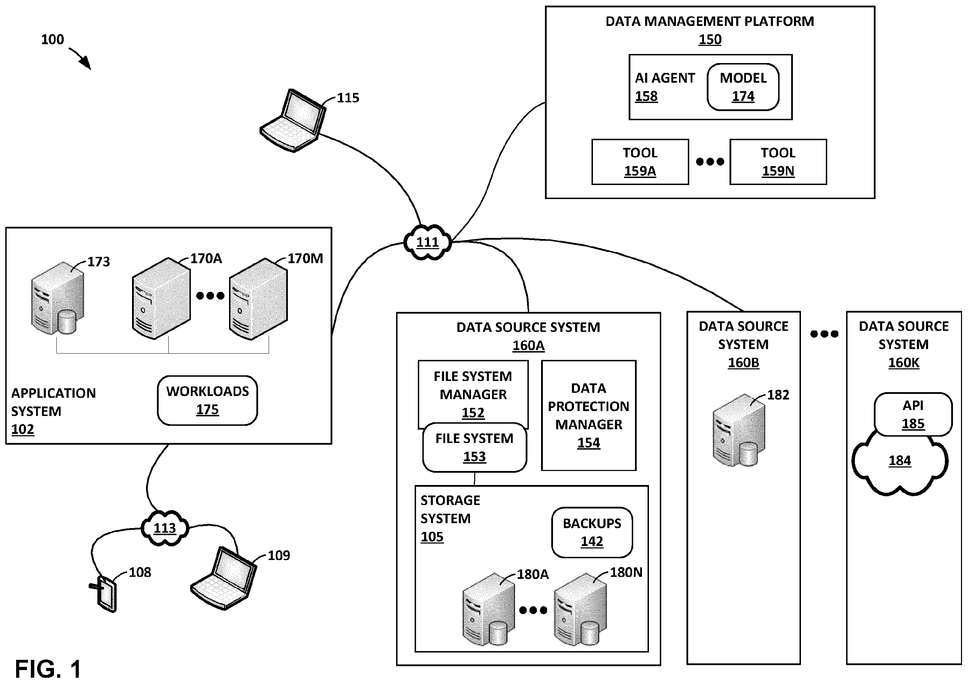

FIG. 1 is a block diagram illustrating an example system for data management, in accordance with one or more examples of the present disclosure. In the example of FIG. 1, system 100 includes application system 102. Application system 102 represents a collection of hardware devices, software components, and/or data stores that can be used to implement one or more applications or services provided to one or more mobile devices 108 and one or more client devices 109 via a network 113. Application system 102 may include one or more physical or virtual computing devices that execute workloads 175 for the applications or services. Workloads 175 may include one or more virtual machines, containers, Kubernetes pods each including one or more containers, bare metal processes, and/or other types of workloads.

In the example of FIG. 1, application system 102 includes application servers 170A-170M (collectively, "application servers 170") connected via a network with database server 173 implementing a database. Other examples of application system 102 may include one or more load balancers, web servers, network devices such as switches or gateways, or other devices for implementing and delivering one or more applications or services to mobile devices 108 and client devices 109. Application system 102 may include one or more file servers. The one or more file servers may implement a primary file system for application system 102. (In such instances, file system 153 may be a secondary file system that provides backup, archive, and/or other services for the primary file system. Reference herein to a file system may include a primary file system or secondary file system, e.g., a primary file system for application system 102 or file system 153 operating as either a primary file system or a secondary file system.) Application system 102 may be located on premises and/or in one or more data centers, with each data center a part of a public, private, or hybrid cloud. The applications or services may be distributed applications. The applications or services may support enterprise software, financial software, office or other productivity software, data analysis software, end user relationship management, web services, educational software, database software, multimedia software, information technology, health care software, or other type of applications or services. The applications or services may be provided as a service (-aaS) for Software-aaS, Platform-aaS, Infrastructure-aaS, Data Storage-aas (dSaaS), or other type of service.

In some examples, application system 102 may represent an enterprise system that includes one or more workstations in the form of desktop computers, laptop computers, mobile devices, enterprise servers, network devices, and other hardware to support enterprise applications. Enterprise applications may include enterprise software, financial software, office or other productivity software, data analysis software, end user relationship management, web services, educational software, database software, multimedia software, information technology, health care software, or other type of applications. Enterprise applications may include applications that generate queries to AI agent 158, for which AI agent 158 responds. AI agent 158 may respond to queries based on backup data stored at a storage system 105 of data source system 160A, using services available at data source systems 160A-160K (collectively, "data source systems 160"), or using other data stored and available from data source systems 160. Enterprise applications may be delivered as a service from external cloud service providers or other providers, executed natively on application system 102, or both. Application system 102 may be considered a data source system, in some examples.

In the example of FIG. 1, system 100 includes a data source system 160A that provides a file system 153 and backup functions to an application system 102 using storage system 105. In some cases, data source system 160A may use a separate, secondary storage system (not shown) to store backup data. Data source system 160A implements a distributed file system 153 and a storage architecture to facilitate access by application system 102 to file system data and to facilitate the transfer of data between storage system 105 and application system 102 via network 111. With the distributed file system, data source system 160A enables devices of application system 102 to access file system data, via network 111 using a communication protocol, as if such file system data was stored locally (e.g., to a hard disk of a device of application system 102). Example communication protocols for accessing files and objects include Server Message Block (SMB), Network File System (NFS), or AMAZON Simple Storage Service (S3). File system 153 may be a primary file system or secondary file system for application system 102.

File system manager 152 represents a collection of hardware devices and software components that implements file system 153 for data source system 160A. Examples of file system functions provided by the file system manager 152 include storage space management including deduplication, file naming, directory management, metadata management, partitioning, and access control. File system manager 152 executes a communication protocol to facilitate access via network 111 by application system 102 to files and other objects stored to storage system 105.

Data source system 160A includes storage system 105 having one or more storage devices 180A-180N (collectively, "storage devices 180"). Storage devices 180 may represent one or more physical or virtual compute and/or storage devices that include or otherwise have access to storage media. Such storage media may include one or more of flash drives, solid state drives (SSDs), hard disk drives (HDDs), forms of electrically programmable memories (EPROM) or electrically erasable and programmable (EEPROM) memories, and/or other types of storage media used to support data source system 160A. Different storage devices of storage devices 180 may have a different mix of types of storage media. Each of storage devices 180 may include system memory. Each of storage devices 180 may be a storage server, a network-attached storage (NAS) device, or may represent disk storage for a compute device. Storage system 105 may include a redundant array of independent disks (RAID) system, Storage as a service (STaaS), Network Attached Storage (NAS), and/or a Storage rea Network (SAN). In some examples, one or more of storage devices 180 are both compute and storage devices that execute software for data source system 160A, such as file system manager 152 and data protection manager 154 in the example of system 100, and store objects and metadata for data source system 160A to storage media. In some examples, separate compute devices (not shown) execute software for data source system 160A, such as file system manager 152 and data protection manager 154 in the example of system 100. Each of storage devices 180 may be considered and referred to as a "storage node" or simply as "node". In some examples, storage devices 180 may represent virtual machines running on a supported hypervisor, a cloud virtual machine, a physical rack server, or a compute model installed in a converged platform.

In some examples, data source system 160A runs on physical systems, virtually, or natively in the cloud. For instance, data source system 160A may be deployed to a physical cluster, a virtual cluster, or a cloud-based cluster running in a private cloud, on-prem, hybrid cloud, or a public cloud deployed by a cloud service provider. In some examples of system 100, multiple instances of data source system 160A may be deployed, and file system 153 may be replicated among the various instances. In some cases, data source system 160A is a compute cluster that represents a single management domain. The number of storage devices 180 may be scaled to meet performance needs.

Data source system 160A may implement and offer multiple storage domains to one or more tenants or to segregate workloads 175 that require different data policies. A storage domain is a data policy domain that determines policies for deduplication, compression, encryption, tiering, and other operations performed with respect to objects stored using the storage domain. In this way, data source system 160A may offer users the flexibility to choose global data policies or workload specific data policies. Data source system 160A may support partitioning.

A view is a protocol export that resides within a storage domain. A view inherits data policies from its storage domain, though additional data policies may be specified for the view. Views can be exported via SMB, NFS, S3, and/or another communication protocol. Policies that determine data processing and storage by data source system 160A may be assigned at the view level. A protection policy may specify a backup frequency and a retention policy.

Each of network 113 and network 111 may be the internet or may include or represent any public or private communications network or other network. For instance, each of network 113 and network 111 may be a cellular, Wi-Fi^{®}, ZigBee^{®}, Bluetooth^{®}, Near-Field Communication (NFC), satellite, enterprise, service provider, local area network, and/or other type of network enabling transfer of data between computing systems, servers, computing devices, and/or storage devices. One or more of such devices may transmit and receive data, commands, control signals, and/or other information across network 113 or network 111 using any suitable communication techniques. Each of network 113 or network 111 may include one or more network hubs, network switches, network routers, satellite dishes, or any other network equipment. Such network devices or components may be operatively inter-coupled, thereby providing for the exchange of information between computers, devices, or other components (e.g., between one or more client devices or systems and one or more computer/server/storage devices or systems). Each of the devices or systems illustrated in FIG. 1 may be operatively coupled to network 113 and/or network 111 using one or more network links. The links coupling such devices or systems to network 113 and/or network 111 may be Ethernet, Asynchronous Transfer Mode (ATM) or other types of network connections, and such connections may be wireless and/or wired connections. One or more of the devices or systems illustrated in FIG. 1 or otherwise on network 113 and/or network 111 may be in a remote location relative to one or more other illustrated devices or systems.

Application system 102, using file system 153 provided by data source system 160A, generates objects and other data that file system manager 152 creates, manages, and causes to be stored to storage system 105. For this reason, application system 102 may alternatively be referred to as a "source system," and file system 153 for application system 102 may alternatively be referred to as a "source file system." Application system 102 may for some purposes communicate directly with storage system 105 via network 111 to transfer objects, and for some purposes communicate with file system manager 152 via network 111 to obtain objects or metadata indirectly from storage system 105. File system manager 152 generates and stores metadata to storage system 105. The collection of data stored to storage system 105 and used to implement file system 153 is referred to herein as file system data. File system data may include the aforementioned metadata and objects. Metadata may include file system objects, tables, trees, or other data structures; metadata generated to support deduplication; or metadata to support snapshots. Objects that are stored may include files, virtual machines, databases, applications, pods, container, any of workloads 175, system images, directory information, or other types of objects used by application system 102. These may also be referred to as "backup objects." Objects of different types and objects of a same type may be deduplicated with respect to one another.

Data source system 160A includes data protection manager 154 that provides data protection operations for file system data for file system 153. In the example of system 100, data protection manager 154 backs up file system data to backups 142 stored by storage system 105. In some examples, a separate storage system (not shown) may store backups 142. The separate storage system may deployed and managed by a cloud storage provider and referred to as a "cloud storage system." In some examples, the separate storage system is co-located with storage system 105 in a data center, on-prem, or in a private, public, or hybrid cloud. The separate storage system may be considered a "backup" or "secondary" storage system for storage system 105 when storage system 105 is a primary storage system. The separate storage system may be referred to as an "external target" for backups 142A-142K (collectively, "backups 142"). Any of data source systems 160B-160K may be the separate, secondary storage system for data source system 160A.

Because storage system 105 is often more difficult or expensive to scale, data source system 160A may use a secondary storage system to support secondary data protection use cases such as backup, archive, mirroring, disaster recovery, and/or replication. In general, a file system backup is a copy of file system 153 to support protecting file system 153 for quick recovery, often due to some data loss in file system 153, and a file system archive ("archive") is a copy of file system 153 to support longer term retention and review. The "copy" of file system 153 may include only such data as is needed to restore or view file system 153 in its state at the time of the backup or archive. While the techniques of this disclosure are described with respect to retrieving backup data stored to storage system 105 or a secondary storage system, the techniques may be applied with respect to any data stored as a form of backup data to any storage system. For example, backup data can include archive data, replicated data, mirrored data, or snapshots.

Data protection manager 154 may back up file system data for file system 153 at any time in accordance with backup policies that specify, for example, backup periodicity and timing (daily, weekly, etc.), which file system data is to be backed up, storage location, access control, and so forth. A backup of file system data corresponds to a state of the file system data at a backup time. Backups 142 thus represent time series data for file system 153 in that each backup stores a representation of file system 153 at a particular time. Because file system 153 changes over time due to creation of new objects, modification of existing objects, and deletion of objects, backups 142 will differ. A backup may include a full backup of the file system 153 data or may include less than a full backup of the file system 153 data, in accordance with backup policies. For example, a given backup of backups 142 may include all objects of file system 153 or one or more selected objects of file system 153. A given backup of backups 142 may be a full backup or an incremental backup.

Backups 142 may be used to generate views and snapshots. A current view generally corresponds to a (near) real-time backup state of the file system 153. A snapshot represents a backup state of the primary storage system 105 at a particular point in time. That is, each snapshot provides a state of data of file system 153, which can be restored to the primary storage system 105 if needed. Similarly, a snapshot can be exposed to a non-production workload, or a clone of a snapshot can be created should a non-production workload need to write to the snapshot without interfering with the original snapshot.

Thus, data protection manager 154 may use any of backups 142 to subsequently restore the file system (or portion thereof) to its state at the backup creation time, or the backup may be used to create or present a new file system (or "view") based on the backup, for instance. Data protection manager 154 may deduplicate file system data included in a subsequent backup against file system data that is included in one or more previous backup. For example, a second object of file system 153 and included in a second backup may be deduplicated against a first object of file system 153 and included in a first, earlier backup.

Backup manager 154 may apply deduplication as part of a write process of writing (i.e., storing) an object of file system 153 to one of backups 142 in storage system 105. Additional description of an example deduplication process is found in U.S. Patent Application No. 18/183,659, filed 14 March 2023, and titled "Adaptive Deduplication of Data Chunks," which is incorporated by reference herein in its entirety. A user or application associated with application system 102 may have access (e.g., read or write), via data source system 160A or via data management platform 150, to backup data that is stored in a separate storage system.

Data source systems 160 contain a wealth of information for an enterprise, but backups 142 have high access latencies, being stored to slower storage mediums. In addition, in a modern, distributed architecture, it can be complex to collect, collate, and leverage data from workflows across an organization's data estate. Data source systems 160 may operate in a myriad of locations, spanning private data centers, single or multiple clouds, SaaS applications hosted by other organizations, and edge locations like stores, Internet-of-Things (IoT) devices, and many other applications. Conventional data platforms may store petabytes (or more) of data without classifying, indexing, or tracking it. This is often referred to as "dark data," and it's typically unknown to the organization and is often unstructured and/or difficult to access. The main challenge with dark data is that it represents a missed opportunity for organizations to gain insights and make informed decisions, and secure and protect data.

With advanced backup systems, backup data can be made readily available to be analyzed and used by machine learning / artificial intelligence applications to drive additional value for users and enterprises. U.S. Patent Application 18/618,695 filed 27 March 2024 and titled "DATA RETRIEVAL USING EMBEDDINGS FOR DATA IN BACKUP SYSTEMS," which is incorporated by reference herein in its entirety, describes retrieval augmented generation in which a data platform extracts data in the form of text from a data source, creates semantic indexes on the data, and uses the indexes to generate insights into the data.

Data management platform 150 may provide centralized data management for data associated with a user. The user can be an organization, tenant, human person, enterprise, or human agent thereof, for instance. Data management platform 150 generates user interfaces for output and display via user devices, such as user device 115 that access data management platform 150 via network 111.

Data associated with a user and managed by data management platform 150 can be spread across multiple diverse data source systems 160. Data source systems 160 make data accessible to data management platform 150 via network 111. To access the data, data management platform 150 leverages tools 159A-159N (collectively, "tools 159"). Each of data source systems 160 may represent a different type of data source such that the different data source systems are diverse and accessed using different tools 159 and protocols and may provide data according to different data types and formats. For example, data source systems 160 can each provide the data in a different format, according to different access protocols or interfaces, are dynamic or static, and otherwise differ in their accessibility to data management platform 150 such that they are diverse.

Data source systems 160 can be dynamic or static. Dynamic data source systems are those that store, provide, or otherwise make accessible data that is rapidly changing. These can include machine generated data streams or real-time data feeds, for example. Example dynamic data sources may include application programming interface (API) endpoints or Software as a service (SaaS) application endpoints-such as are illustrated by API 185 for a cloud service 184, machine log data, message bus streams, a relational database-such as is illustrated by database system 182, key/value stores, pub/sub service systems, etc. Static data source systems are those that store, provide, or otherwise make accessible data that changes or updates at a slower rate. Example static source systems include backup sources such as data source system 160A, vectorized context repositories such as are described in U.S. Patent Application 18/618,695, archive systems, etc.

Tools 159 may be functions that AI agent 158 invokes to access or manage data stored by or made accessible from data source systems 160. Tools 159 may be implemented as independent software applications, which may execute directly on data management platform 150 co-located with AI agent 158, or which may execute on one or more external systems. One or more of tools 159 may be third-party applications specially developed to access corresponding ones of data source systems 160.

Each of tools 159 implements a northbound interface that can be invoked by AI agent 158 for machine-to-machine communication. Each tool of tools 159 may be capable of interacting with a corresponding one of data source systems 160 to execute requests received at the northbound interface of the tool. To interact with data source systems 160 to access or manage data or access metadata for the data, tools 159 may implement one or more communication protocols.

AI agent 158 receives, e.g., from user device 115, an input indicative of a query. A query can include text, for instance. The query may be a request that data management platform 150 perform, on behalf of the user of user device 115, a task with respect to data associated with a user and stored by any one or more data source systems 160. In some examples, the query may be independent of a user or user device 115 but still relate to data associated with the user and stored by any one or more data source systems 160. Examples of such queries include an internal system query, a query relating to a scheduled or periodic task or a query relating to preemptive analysis.

Satisfying the task may require that data management platform 150 perform multiple actions on behalf of the user of user device 115. For example, a query may be a request to optimize backups 142, perform a security operation, configure one or more data source systems 160, migrate data from data source system 160A to data source system 160B, generate an analysis or operational insight for data stored at data source system 160A and data source system 160B, perform an administrative task, etc. The query can be a natural language query. (References herein to security-related tasks are to be understood as a form of data management.)

In some examples, a request to optimize backups may involve at least one of a request to: identify overlapping backup windows across different systems to reduce redundancy and optimize resource usage, detect and eliminate duplicate records across multiple data source systems before initiating backups, align retention policies for data stored in multiple data source systems to ensure compliance, implement incremental backups that track changes across data source systems rather than duplicating entire datasets, and develop a unified recovery plan that incorporates data from multiple platforms, ensuring seamless restoration.

In some examples, a request to perform a security operation may involve at least one of a request to: align permissions and access rules across systems to ensure consistent security policies, aggregate log data from multiple data source systems to create a comprehensive audit trail for compliance purposes, and implement consistent data masking policies across end user databases and analytics platforms.

In some examples, a request to configure one or more data source systems 160 may involve at least a request to: setup a new relational database for user data storage, connect multiple systems like CRM, ERP, and data warehouses, configure a security of one or more data systems by setting up, for example, encryption protocols, implementing role-based access control (RBAC) and data masking, and configuring firewall rules and IP whitelisting for secure connections, a request to align data structures between data source systems, perform a backup and recovery configuration, and configure a performance optimization to improve data flow efficiency.

In some cases, requested tasks can be or include tasks typically available using a graphical user interface (GUI) or command-line interface (CLI) of data management platform 150 (interfaces not shown in FIG. 1). Data management platform 150 may implement APIs, according to an API specification, that can be accessed and invoked to perform data management tasks.

AI agent 158 includes a machine learning model 174 that is based on artificial intelligence or other machine learning techniques. For example, machine learning model 174 may include or use Word2Vec or Global Vectors for Word Representation (GloVe), Recurrent Neural Networks (RNNs)-such as Long Short-Term Memory (LSTM) or Gated Recurrent Unit (GRU) architectures, transformer models, Convolutional Neural Networks (CNNs), Graph Neural Networks (GNNs), autoencoders, Gradient Boosting Machines (GBMs), Deep Neural Networks (DNN), or other artificial neural networks.

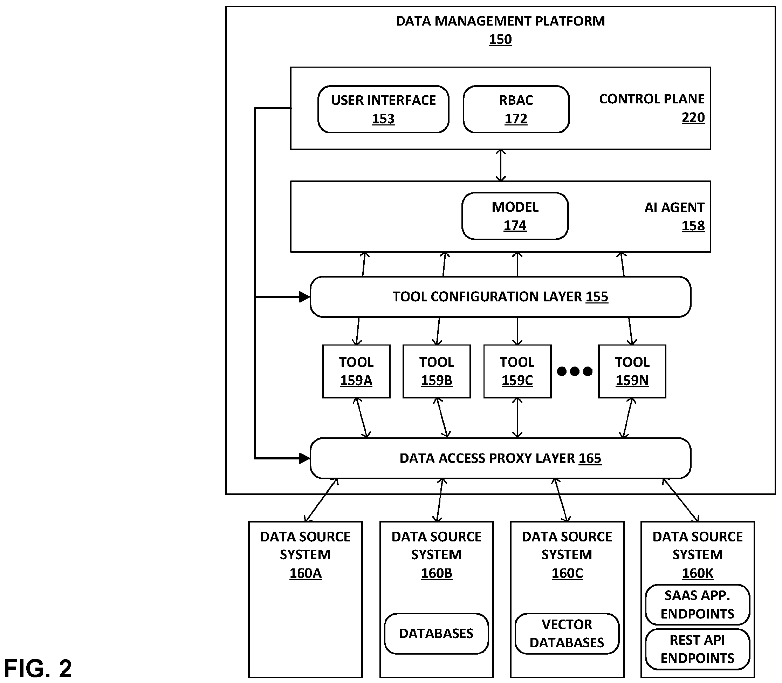

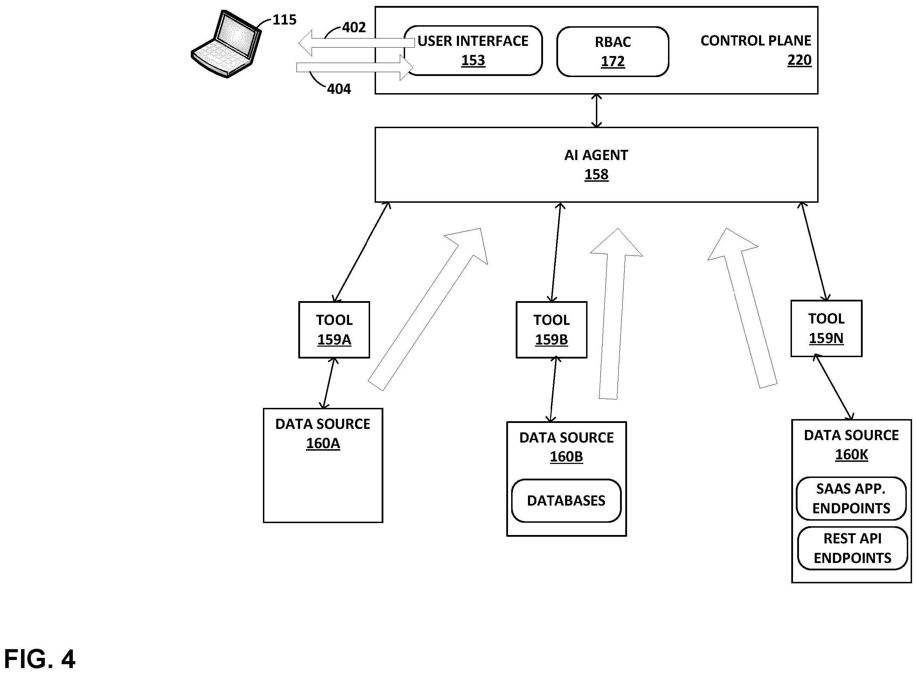

Machine learning model 174 may be a large language model (LLM). Machine learning model 174 may be trained on action-based outcomes to be more in tune with actions that need to be performed in a data management and security solution. Such training may involve fine-tuning a third-party LLM to be able to quickly perform data management- and security-related tasks. Machine learning model 174 may be implemented by a separate computing system from the computing system that implements data management platform 150. For example, machine learning model 174 may be offered as a service to data management platform 150 via a network. In such examples, a control plane for data management platform 150 manages communications with machine learning model 174 (see FIGS. 2, 4).

A machine learning system, in some examples separate from data management platform 150 but in some examples part of or executed by data management platform 150, may be used to train machine learning model 174 for AI agent 158. The machine learning system may be executed by a computing system. For example, the machine learning system may apply one or more of nearest neighbor, naive Bayes, decision trees, linear regression, support vector machines, neural networks, k-Means clustering, Q-learning, temporal difference, deep adversarial networks, or other supervised, unsupervised, semi-supervised, or reinforcement learning algorithms to train machine learning model 174.

AI agent 158 may also be referred to as an AI assistant, a chat agent, a chatbot, a virtual assistant, or a conversational interface. AI agent 158 may perform a task based on the query by leveraging tools 159 to complete tasks involving one or more source systems 160 to satisfy the query. Performing a task may include generating and outputting a response to the user. AI agent 158 can perform multiple tasks for multiple different queries. In some examples, AI agent 158 ingests an API specification for APIs implemented by data management platform 150 to perform operations typically available to the user via an interface. In such examples, AI agent 158 applying model 174 to a query can invoke the APIs of data management platform 150 to perform a requested task.

Each of tools 159 may extend the capability of AI agent 158 to intelligently access data in a different source system, e.g., by implementing additional protocol(s) and formulating requests that the AI agent 158, and more specifically model 174, is trained to leverage in order to autonomously (or semi-autonomously) act on behalf of the user to satisfy user queries.

In some examples, data management platform 150 configures tools 159 to use the role-based access privileges of a user. Consequently, AI agent 158 leveraging a tool 159 inherits the user's privileges and is thus able to interact with a data source system 160 accessed by the tool as though it is the user interacting directly with the data source system. AI agent 158 is extensible to incorporate additional tools 159.

Each of tools 159 may be configured for use by AI agent 158 by configuring the tool to access a corresponding one of data source system 160 and by enabling AI agent 158 to use the tool. Such configuration may be performed by a user and may involve the user specifying the particular tools of tools 159 that AI agent 158 is to use with respect to data associated with the user, specifying how AI agent 158 is to connect to tools 159, what types of calls tools 159 are able to make, and how tools 159 can authenticate and authorize against data source systems 160. Tools 159 configuration is described in further detail with respect to FIG. 2.

Based on a query, AI agent may select one or more tools of tools 159 that it can use to perform a task acting autonomously or semi autonomously on behalf of the user associated with the query. Privileged roles across selected tools may be accounted for and passed through such that if AI agent 158 is acting (semi-)autonomously on behalf of a user, AI agent 158 is acting as if it is the user with respect to data source systems 160 access by the selected tools.

As an example, consider a case in which backups 142 include backups for data stored by data source system 160B. If a query requests to optimize backups for data stored by data source system 160B, AI agent 158 may select and use tool 159A to interface with data source system 160A to obtain historical data describing backups 142 regarding, e.g., scope, timing, applied policies, sizes, etc. AI agent 158 may select and use tool 159B to interface with data source system 160B to obtain data describing database system 182. Based on the historical data describing previous backups 142 and the data describing database system 182, AI agent 158 can interact, via tool 159A, with data source system 160A to optimize backup settings for future backups of database system 182.

Role(s) for the user that issued the query, on data source systems 160, may constrain the actions that can be taken by AI agent 158 with respect to the data source systems, as well as the data that can be accessed by AI agent 158 and made available to the user in a response to a query. Continuing the above example, privileges of the role for the user with respect to data source system 160A determine whether and in what manner AI agent 158 can configure data source system 160B to optimize backup settings for future backups of database system 182.

If a user does not have sufficient privileges to perform an action with respect to one of data source systems 160, AI agent 158 will not perform the action. This limitation facilitates the secure access by users.

The techniques may provide one or more technical advantages. Existing solutions that interact with data source systems and applications are time consuming to configure and use to accomplish new tasks involving the data source systems. The techniques of this disclosure may extend the capabilities of data management platform 150, and specifically AI agent 158 applying model 174, to interact with data source systems 160 and applications to allow data management platform 150 to not only augment the user's understanding and capabilities with respect to data and applications distributed across multiple systems, but to enable that user to leverage AI agent 158 to accomplish new tasks, generate new operational insights, and otherwise more efficiently and intelligently manage data accessible from multiple diverse systems.

FIG. 2 is a block diagram illustrating an example data management platform 150, in accordance with various techniques of this disclosure. Data management platform 150 includes control plane 220 implementing user interface 153 and role-based access control (RBAC) 172, AI agent 158, tool configuration layer 155, tools 159, and data access proxy layer 165. Control plane 220 configures tools 159 based in part on RBAC 172, and control plane 220 facilitates access to data source systems 160 via data access proxy layer 165.

RBAC 172 specifies privileges or permissions for users of data management 150 according to user roles. Roles may represent different job functions or responsibilities within an organization. For example, roles could be "manager," "employee," "administrator," etc. Permissions are actions that users assigned a role are allowed to perform within different data source systems 160. For example, permissions could include "read," "write," "delete," the ability to configure select services or functions within a data source system, and so forth. RBAC 172 enhances security by ensuring that users only have access to the resources and data that are necessary for their roles, reducing the risk of unauthorized access and data breaches. RBAC 172 may improve compliance with regulatory requirements by providing a structured approach to access control and auditing.

User interface module 153 ("user interface 153") generates and outputs, for display at user devices, user interfaces by which data management platform 150 can, e.g., receive user inputs, including prompts for AI agent 158, and output responses generated by AI agent 158.

Tools 159 include functions that can be invoked ("called") by AI agent 158. To accomplish a task based on a query, AI agent 158 requires access to the appropriate tools 159 with which to accomplish the task, and AI agent 158 must be trained with descriptive information for the tools and/or have access to descriptive information for the tools to enable AI agent 158 to select and use tools 159 to perform actions to accomplish the task. Tools 159 are the means by which AI agent 158 can access other sources of data, leverage protocols for such access, formulate calls to the data source systems 160, and can filter the returned data.

To train AI agent 158 (and more specifically, model 174) to use tools 159, AI agent 158 may obtain and digest configuration information in the form of specifications for a tool describing the actions that the tool is capable of performing. Such specifications can include API specifications, user or administrative manuals, or websites, for instance. AI agent 158 may also be trained with training data generated from previous tasks accomplished by users of data management platform 150. Such training data may include records of user interaction via user interface 153, commands issued by control plane 220 to any of data source systems 160, a description of data received, or other data that has an association between a desired task to accomplish and the results of that task.

The instruction sets (actions) that can be performed by tools 159, and then the data structures for how to perform those particular calls are configured via tool configuration layer 155. AI agent 158 via tool configuration layer 155 interacts with tools 159, and by extension data source systems 160, primarily using available calls. RBAC 172 may then be applied to those actions. For example, there may be an action to create backup job. Based on RBAC 172, more fine-grained action privileges may be applied for a user query, based on the user, to that particular action of creating the backup job. For instance, the user (and therefore AI agent 158) may be able to create a backup job involving a first set of objects in a data source system, but the user does not have permission to create a backup job involving a second set of objects in the data source system. AI agent 158 therefore must be trained or otherwise have access to the actions that can be performed as well as the privileges / permissions of users in order to security and successfully generate the appropriate calls to perform actions to accomplish a task based on a query.

Tool configuration layer 155 enables for an individual user to specify which of tools 159 AI agent 158 can use on behalf of the user, specify how AI agent 158 is to connect to the tools, specify the types of calls selected tools 159 are able to make to data source systems 160, and how selected tools 159 can authenticate and authorize against data source systems 160. Different areas of configuration for each tool may include the following, with corresponding configuration information:
1) Tool Application / Data source - define the target application for the tool to interact with, such as any of data source systems 160. Examples applications may include workflow management applications, data management applications, SaaS applications, database management tools, data protection systems, and others.
2) Tool Access Method - Specify the manner in which the tool will access data from the data source system. Examples may include APIs, GraphQL, Open Database Connectivity (ODBC), and others.
3) Tool Calls Methods - Specify the scope of calls to the target application / data source system. Some examples of scope are: GET, PUT, POST, DELETE, SELECT, INSERT, UPDATE, DELETE, DROP, etc. These scopes may be associated with the access method protocols.
4) Tool Authentication / Authorization - Specify a method and details for authenticating AI agent 158 against the target application / data source system. Example details may include credentials for the user in the form of a user-provided API Key, a credentials file, a username and a password, etc., as well as an authentication protocol, such as OAuth, OpenID Connect, Security Assertion Markup Language, Kerberos, or Lightweight Directory Access Protocol.
5) Tool Description - A verbose description on what the tool is used for and the types, semantics, syntax, and or description of data that the tool will return.
6) Tool Name - A unique name for the tool to be referenced by AI agent 158.

Each of the above may be configured by a user using user interface 153. In some cases, an administrator / operator for data management platform 150 may use user interface 153 to define and configure tools 159 through tool configuration layer 155.

Data access proxy layer 165 enables tools 159 configured through tool configuration layer 155 to access data source systems 160 accordingly. In order for a tool of tools 159 to connect with its configured data source system of data source systems 160, the tool may need to authenticate to the data source system and check the authorization of the user's access to the data, which in accordance with various techniques of this disclosure is obtained from RBAC 172 based on a role of the user that has made a query to AI agent 158. Data access proxy layer 165 may constrain the actions that can be performed with respect to data source systems 160 as well as the data from data source systems 160 that is visible. Because data management platform 150 understands how to interact with data source systems 160 and has an indication of the identity of the user, data access proxy layer 165 can broker the permissions and access levels between tools 159 accessing data source systems 160, the data, and the user. Data management platform 150 may receive an indication of the identity of the user through a login process.

To accomplish authentication / authorization, when a tool / data source system is registered with data management platform 150, the configuration state for that data access path may be stored to data access proxy layer 165. For example, if the service is a RESTful API endpoint, the user should pre-configure the state with an access token or allow for the user to passthrough the user's session access token.

Some of tools 159 may be set up to access registered storage systems (e.g., data source systems for which data protection is being applied by data management platform 150). In such cases, the authentication method / protocol for accessing the data can be the same as the source registration or it can be provided by the user via a passthrough method.

Data access proxy layer 165 may receive an indication of the user (i.e., the requestor for the query), obtain from control plane 220 the user's role for the selected data source systems 160, obtain authentication details for the corresponding tools 159, and obtain or generate an appropriate authentication mechanism for the usage of each of the corresponding tools. Because some of tools 159 may be stateless, data access proxy layer 165 may perform these operations each time a tool is invoked on behalf of the user.

Once the method of access and authentication has been delivered to a tool of tools 159, the tool can then execute its given action(s) to further the task according to an execution plan devised by AI agent 158.

AI agent 158, in the example of FIG. 2, is a top-level agent that is responsible for two main tasks. First, AI agent 158 interacts with the end user (or "requestor"). AI agent 158 will generate a response for a given input query by the user. Second, AI agent 158 selects, from available tools 159 for the user, the one or more tools needed to complete a given task. AI agent 158 will invoke the selected one or more tools needed to satisfy the input query.

Data management platform 150 in this way provides a solution that enables AI agent 158 to interact not only with the backup system and its data sources, but also with other systems the backup system is connected to or interacts with by leveraging the information data management platform 150 has regarding those systems, so as to act on behalf of a user that issues a query.

AI agent 158 can interact, using tools 159, with data source systems 160 to interact with and optimize interactions with those data source systems. Allowing the AI agent 158 to be able to interact with those external sources, separate from the backup system, in an autonomous manner, whether it be to perform a task to exchange data or configuration information, to help optimize the configuration, or to backup and ensure security of the data. Interacting with data source systems 160 allows AI agent 158 to understand the configuration and state of those systems, which in turn enables AI agent 158 to be able to interact with, optimize and configure those environments autonomously or semi-autonomously on behalf of a user.

AI agent 158 can execute multiple calls to data source systems 160 to accomplish tasks based on queries. In other words, AI agent 158 can multithread the information retrieval and action calling. AI agent 158 may be able to reason on a real-time data feed and simultaneously execute actions to accomplish tasks. AI agent 158 may be able to reason across all configured tools 159 simultaneously, select multiple actions to achieve a task, and execute the multiple actions concurrently with respect to some data. In addition, data source systems 160 can output data to data management platform 150 in a variety of formats. In some examples, AI agent 158 does not need to maintain the schema of the data received; AI agent 158 can translate incoming data schemas into useful information for AI agent 158 to be able to perform a next action.

Data received from any of data source systems 160 may be made available to model 174 to drive RAG queries, and other such AI/ML application usage. RAG is a framework that combines pre-trained sequence-to-sequence (seq2seq) models with a dense retrieval mechanism, allowing for the generation of more informed and contextually relevant output. This allows users and applications to retrieve data in a secure and efficient manner, without compromising the integrity of the system or the data itself. The RAG queries are also tailored to the specific data types identified by the machine learning analysis, ensuring that users and applications can quickly and easily access the desired information.

In the era of artificial intelligence, off-the-shelf trained large language models (LLMs) have emerged as a powerful tool for generating human-like responses in various applications. However, most existing knowledge-grounded conversation models rely on out of date materials that could be individual documents related to the topic of a conversation, limiting LLMs' ability to generate diverse and knowledgeable responses that could involve more proprietary or domain-specific. To overcome this challenge, the concept of RAG has been introduced, which combines the strengths of LLMs with the ability to retrieve information from multiple documents. RAG not only enables LLMs to generate more knowledgeable, diverse, and relevant responses but also offers a more efficient approach to fine-tuning these models. By using RAG to determine what to respond with and fine-tuning to guide how to respond, LLMs can deliver a more engaging and informative conversational experience.

AI agent 158 executing a workflow to accomplish a task may use RAG to leverage data in any of data source systems 160 and incorporate (or enable) 'AI Ready' for RAG-assisted large language models (LLMs). The data may be secured through RBAC 172. By leveraging RAG on top of an enterprise's own dataset, a user may not need to perform lengthy fine-tuning or initial training to teach the Language Models (e.g., model 174) how to accomplish a given task. Leveraging RAG provides the most recent and relevant context to any query. The techniques may also enable responses that are based on any point in time for dynamic data in data source systems 160.

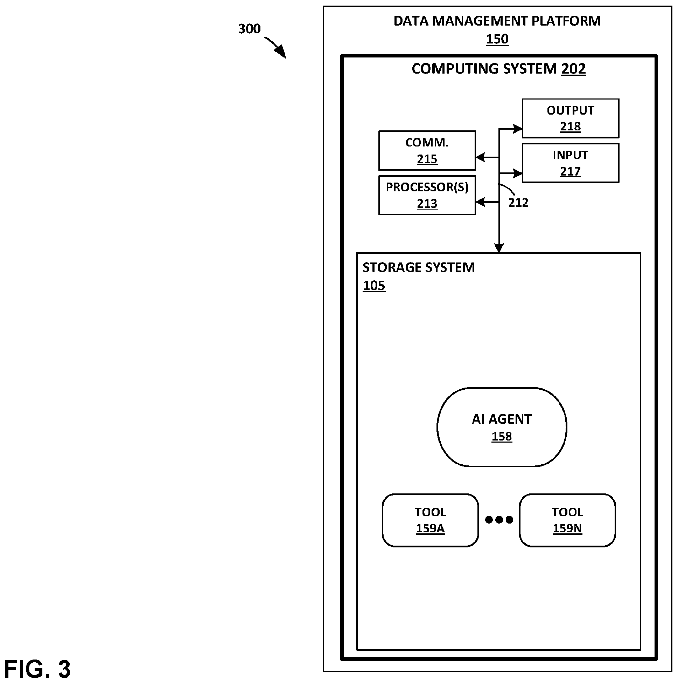

FIG. 3 is a block diagram illustrating an example of a computing system that implements data management platform 150, in accordance with various techniques of this disclosure. Computing system 202 may be implemented as any suitable computing system, such as one or more server computers, workstations, mainframes, appliances, cloud computing systems, and/or other computing systems that may be capable of performing operations and/or functions described in accordance with one or more aspects of the present disclosure. In some examples, computing system 202 represents a cloud computing system, server farm, and/or server cluster (or portion thereof) that provides services to other devices or systems. In other examples, computing system 202 may represent or be implemented through one or more virtualized compute instances (e.g., virtual machines, containers) of a cloud computing system, server farm, data center, and/or server cluster.

In the example of FIG. 3, computing system 202 may include one or more communication units 215, one or more input devices 217, one or more output devices 218, and one or more storage devices of storage system 105. Storage system 105 includes AI agent 158 and tools 159, which are software modules in this example. However, any one or more of tools 159 may execute on different systems. One or more of the devices, modules, storage areas, or other components of computing system 202 may be interconnected to enable inter-component communications (physically, communicatively, and/or operatively). In some examples, such connectivity may be provided by through communication channels (e.g., communication channels 212), which may represent one or more of a system bus, a network connection, an inter-process communication data structure, or any other method for communicating data.

The computing system 202 comprises processing means. In the example of FIG. 2, the processing means comprises one or more processors 213 configured to implement functionality and/or execute instructions associated with computing system 202 or associated with one or more modules illustrated herein and/or described below, including AI agent 158 and tools 159. One or more processors 213 may be, may be part of, and/or may include processing circuitry that performs operations in accordance with one or more examples of the present disclosure. Examples of processors 213 include microprocessors, application processors, display controllers, auxiliary processors, one or more sensor hubs, and any other hardware configured to function as a processor, a processing unit, or a processing device. Computing system 202 may use one or more processors 213 to perform operations in accordance with one or more examples of the present disclosure using software, hardware, firmware, or a mixture of hardware, software, and firmware residing in and/or executing at computing system 202.

One or more communication units 215 of computing system 202 may communicate with devices external to computing system 202 by transmitting and/or receiving data, and may operate, in some respects, as both an input device and an output device. In some examples, communication units 215 may communicate with other devices over a network. In other examples, communication units 215 may send and/or receive radio signals on a radio network such as a cellular radio network. In other examples, communication units 215 of computing system 202 may transmit and/or receive satellite signals on a satellite network. Examples of communication units 215 include a network interface card (e.g., such as an Ethernet card), an optical transceiver, a radio frequency transceiver, a GPS receiver, or any other type of device that can send and/or receive information. Other examples of communication units 215 may include devices capable of communicating over Bluetooth^{®}, GPS, NFC, ZigBee^{®}, and cellular networks (e.g., 3G, 4G, 5G), and Wi-Fi^{®} radios found in mobile devices as well as Universal Serial Bus (USB) controllers and the like. Such communications may adhere to, implement, or abide by appropriate protocols, including Transmission Control Protocol/Internet Protocol (TCP/IP), Ethernet, Bluetooth^{®}, NFC, or other technologies or protocols.

One or more input devices 217 may represent any input devices of computing system 202 not otherwise separately described herein. Input devices 217 may generate, receive, and/or process input. For example, one or more input devices 217 may generate or receive input from a network, a user input device, or any other type of device for detecting input from a human or machine.

One or more output devices 218 may represent any output devices of computing system 202 not otherwise separately described herein. Output devices 218 may generate, present, and/or process output. For example, one or more output devices 218 may generate, present, and/or process output in any form. Output devices 218 may include one or more USB interfaces, video and/or audio output interfaces, or any other type of device capable of generating tactile, audio, visual, video, electrical, or other output. Some devices may serve as both input and output devices. For example, a communication device may both send and receive data to and from other systems or devices over a network.

One or more storage devices of storage system 105 within computing system 202 may store information for processing during operation of computing system 202. Storage devices may store program instructions and/or data associated with one or more of the modules described in accordance with one or more examples of this disclosure. One or more processors 213 and one or more storage devices may provide an operating environment or platform for such modules, which may be implemented as software, but may in some examples include any combination of hardware, firmware, and software. One or more processors 213 may execute instructions and one or more storage devices of storage system 105 may store instructions and/or data of one or more modules. The combination of processors 213 and storage system 105 may retrieve, store, and/or execute the instructions and/or data of one or more applications, modules, or software. Processors 213 and/or storage devices of storage system 105 may also be operably coupled to one or more other software and/or hardware components, including, but not limited to, one or more of the components of computing system 202 and/or one or more devices or systems illustrated as being connected to computing system 202.

AI agent 158 may perform functions relating to AI-assisted data management, as described above with respect to FIGS. 1-2. AI agent 158 may use tools 159 to interact with data sources accessed by the tool as though AI agent 158 is the user interacting directly with the data sources.

FIG. 4 is a block diagram illustrating a workflow of actions performed by AI agent 158 using tools 159. User interface 153 receives a query 402, for example, from a user device 115. The query 402 may be associated with a user. Based on query 402, AI agent 158 formulates an execution plan to accomplish a task to satisfy query 402. AI agent 158 generates the execution plan to include a set of actions that are performed using selected tools 159 to interact with corresponding data source systems 160 for the selected tools 159. AI agent 158 is configured / trained with actions available via each of tools 159 and selects the appropriate one or more tools 159 based on permissions, according to RBAC 172, for the user associated with query 402.

The execution plan can be dynamic, i.e., rather than a static series of actions, some actions may depend on outcomes of prior actions. Moreover, AI agent 158 may change an execution plan as the execution plan is proceeding through the execution phase, based on data obtained from data source systems 160.

In FIG. 4, AI agent 158 executes the generated execution plan to obtain data from data source systems 160B and 160K using actions performed with tool 159B and 159N, respectively. This data determines actions performed with respect to data source system 160A using tool 159A. AI agent 158 generates and outputs a response 404, responsive to query 402, to user device 115. In various examples, user device 115 may instead be any of devices 108, 109, or devices of application system 102, for instance.

In some examples, control plane 220 proxies communications between AI agent 158 and tools 159. For example, AI agent 158 may provide, to control plane 220, an indication of an action for tool 159B. Control plane 220 may invoke tool 159B, on behalf of AI agent 158, to perform the action based on the indication. Control plane 220 may respond to AI agent 158 with any data, instructions, or other information provided by tool 159B as a result of completing the action. In this way, AI agent 158 may be implemented by a separate system while control plane 220 inherits the user's privileges and invokes tools 159 as though it is the user interacting directly with the data sources. This may facilitate privacy and security where the separate system is offered by a third-party, e.g., a cloud provider.

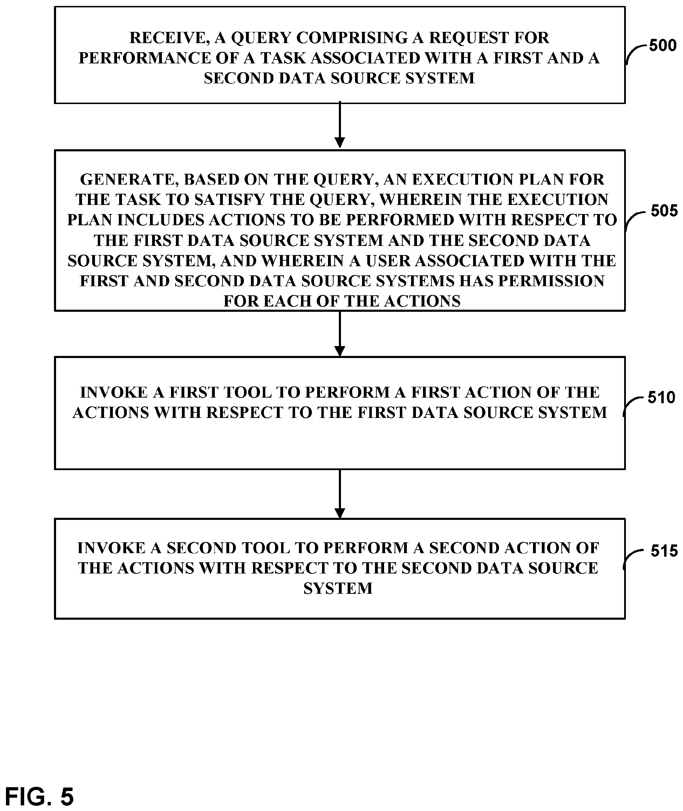

FIG. 5 is a flow diagram illustrating an example operation, in accordance with one or more techniques of this disclosure. As seen in the example of FIG. 5, the operation may involve receiving a query for processing by the AI agent agent, the query comprising a request for performance of a task associated with a first and second data source system (500). AI agent 158 may generate, based on the query, an execution plan for the task to satisfy the query, wherein the execution plan includes actions to be performed with respect to the first data source system and the second data source system, and wherein a user associated with the first and second data source systems has permission for each of the actions (505). Next, AI agent 158 may invoke a first tool to perform a first action of the actions with respect to the first data source system (510). Next, AI agent 158 may invoke a second tool to perform a second action of the actions with respect to the second data source system (515).

For processes, apparatuses, and other examples or illustrations described herein, including in any flowcharts or flow diagrams, certain operations, acts, steps, or events included in any of the techniques described herein can be performed in a different sequence, may be added, merged, or left out altogether (e.g., not all described acts or events are necessary for the practice of the techniques). Moreover, in certain examples, operations, acts, steps, or events may be performed concurrently, e.g., through multi-threaded processing, interrupt processing, or multiple processors, rather than sequentially. Further certain operations, acts, steps, or events may be performed automatically even if not specifically identified as being performed automatically. Also, certain operations, acts, steps, or events described as being performed automatically may be alternatively not performed automatically, but rather, such operations, acts, steps, or events may be, in some examples, performed in response to input or another event.

The detailed description set forth below, in connection with the appended drawings, is intended as a description of various configurations and is not intended to represent the only configurations in which the concepts described herein may be practiced. The detailed description includes specific details for the purpose of providing a thorough understanding of the various concepts. However, it will be apparent to those skilled in the art that these concepts may be practiced without these specific details. In some instances, well-known structures and components are shown in block diagram form in order to avoid obscuring such concepts.

In accordance with one or more aspects of this disclosure, the term "or" may be interpreted as "and/or" where context does not dictate otherwise. Additionally, while phrases such as "one or more" or "at least one" or the like may have been used in some instances but not others; those instances where such language was not used may be interpreted to have such a meaning implied where context does not dictate otherwise.

In one or more examples, the functions described may be implemented in hardware, software, firmware, or any combination thereof. If implemented in software, the functions may be stored, as one or more instructions or code, on and/or transmitted over a computer-readable medium and executed by a hardware-based processing unit. Computer-readable media may include computer-readable storage media, which corresponds to a tangible medium such as data storage media, or communication media including any medium that facilitates transfer of a computer program from one place to another (e.g., pursuant to a communication protocol). In this manner, computer-readable media generally may correspond to (1) tangible computer-readable storage media, which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can include RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the terms "processor" or "processing circuitry" as used herein may each refer to any of the foregoing structure or any other structure suitable for implementation of the techniques described. In addition, in some examples, the functionality described may be provided within dedicated hardware and/or software modules. Also, the techniques could be fully implemented in one or more circuits or logic elements.

Processing means, as used herein, may comprise processing circuitry as has been described above. In some examples, the processing means may comprise at least one processor and at least one memory with computer code comprising a set of instructions, which, when executed by the at least one processor, causes the at least one processor to perform any of the functions described herein. In some examples, the processing means may receive computer code comprising the set of instructions from at least one memory coupled to the processing means.

The techniques of this disclosure may be implemented in a wide variety of devices or apparatuses, including a wireless handset, a mobile or non-mobile computing device, a wearable or non-wearable computing device, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperating hardware units, including one or more processors as described above, in conjunction with suitable software and/or firmware.

### Additional Details

The present disclosure enables at least the following example process. The process involves receiving, by a computing system, a query for processing by an AI agent. The query includes a request to perform a task associated with a first data source system and a second data source system. The query can specify various types of data operations or analyses to be performed across the data source systems.

The AI agent generates an execution plan based on the received query. The execution plan defines a sequence of actions to be performed with respect to both the first data source system and the second data source system to satisfy the requirements specified in the query. The execution plan can include multiple discrete actions that may need to be performed in a particular order or in parallel. A user associated with the first and second data source systems has permission for each of the actions.

The AI agent proceeds to invoke a first tool to perform a first action with respect to the first data source system. The first tool can be selected based on compatibility with the first data source system and the specific type of action required. The first tool executes the designated action on the first data source system according to the execution plan.

The AI agent invokes a second tool to perform a second action with respect to the second data source system. Similar to the first tool, the second tool is selected based on its compatibility with the second data source system and the specific requirements of the second action. The second tool carries out the specified action on the second data source system as defined in the execution plan.

The tools invoked by the AI agent can include various software components, APIs, scripts, or other mechanisms suitable for interacting with their respective data source systems. The actions performed by these tools can include data retrieval, modification, analysis, or other operations supported by the respective data source systems.

The AI agent coordinates operations seamlessly across multiple data source systems through a unified execution plan. The plan determines optimal sequencing and parallelization of actions to process tasks efficiently across system boundaries. This coordinated approach reduces processing overhead and streamlines data operations that span different systems.

The method enables different tools to be integrated and utilized based on the specific requirements of each data source system. A consistent query interface masks the underlying complexity of tool selection and interaction. This approach provides flexibility in tool selection while maintaining a unified experience for processing queries across diverse systems.

Aspects of this disclosure include the following examples.

Example 1. A computing system comprising: one or more storage devices; and processing circuitry having access to the one or more storage devices and configured to: generate, with an artificial intelligence (AI) agent applying a machine learning model, based on a query associated with a user, an execution plan for a task to satisfy the query, wherein the execution plan includes actions to be performed with respect to a first data source system and a second data source system, and wherein the user has permission for each of the actions; invoke, by the AI agent, a first tool to perform a first action of the actions with respect to the first data source system, wherein the AI agent is trained to use the first tool; and invoke, by the AI agent, a second tool to perform a second action of the actions with respect to the second data source system, wherein the AI agent is trained to use the second tool.

Example 2. The computing system of example 1, wherein the processing circuitry is configured to: obtain configuration information for the first tool, wherein the configuration information specifies a scope of calls to the first data source system; and invoke, by the AI agent, the first tool based on the configuration information.

Example 3. The computing system of example 1, wherein the processing circuitry is configured to: obtain configuration information for the first tool, wherein the configuration information specifies a manner in which the first tool is to access data from the first data source system; and invoke, by the AI agent, the first tool based on the configuration information.

Example 4. The computing system of example 1, wherein the processing circuitry is configured to: obtain configuration information for the first tool, wherein the configuration information comprises a specification that describes an action the first tool is capable of performing with respect to the first data source system; and invoke, by the AI agent, the first tool based on the configuration information.

Example 5. The computing system of example 4, wherein the processing circuitry is configured to: process the specification to obtain the action the first tool is capable of performing with respect to the first data source system; and generate, based on the action the first tool is capable of performing with respect to the first data source system and the query, the execution plan to include the invoking of the first tool to perform the first action.

Example 6. The computing system of example 1, wherein the task comprises optimizing, on the second data source system, backups of data associated with the user and stored on the first data source system.

Example 7. The computing system of example 1, wherein the task comprises modifying, on the second data source system, security data associated with the user and stored on the first data source system or the second data source system.

Example 8. The computing system of example 1, wherein the first action comprises obtaining dynamic data from the first data source system.

Example 9. The computing system of example 1, wherein the processing circuitry is configured to: authenticate, by a data access proxy layer, the first tool to the first data source system to enable the first tool to perform the first action.

Example 10. The computing system of example 9, wherein to authenticate the first tool to the first data source system, the processing circuitry is configured to authenticate, based on credentials for the user, the first tool to the first data source system.

Example 11. The computing system of example 1, wherein the first action comprises sending an application programming interface (API) call to an API implemented by the first data source system.

Example 12. The computing system of example 1, wherein to generate the execution plan, the processing circuitry is configured to: selecting, by the AI agent, based on a determination the user has permission to perform a particular action the first tool is capable of performing with respect to the first data source system, the actions of the execution plan to include the particular action.

Example 13. The computing system of example 1, wherein the first data source system and the second data source system are diverse.

Example 14. A method comprising: generating, with an artificial intelligence (AI) agent executed by a computing system and applying a machine learning model, based on a query associated with a user, an execution plan for a task to satisfy the query, wherein the execution plan includes actions to be performed with respect to a first data source system and a second data source system, and wherein the user has permission for each of the actions; invoking, by the AI agent, a first tool to perform a first action of the actions with respect to the first data source system, wherein the AI agent is trained to use the first tool; and invoking, by the AI agent, a second tool to perform a second action of the actions with respect to the second data source system, wherein the AI agent is trained to use the second tool.

Example 15. The method of example 14, further comprising: obtaining configuration information for the first tool, wherein the configuration information specifies a scope of calls to the first data source system; and invoking, by the AI agent, the first tool based on the configuration information.

Example 16. The method of example 14, further comprising: obtaining configuration information for the first tool, wherein the configuration information specifies a manner in which the first tool is to access data from the first data source system; and invoking, by the AI agent, the first tool based on the configuration information.

Example 17. The method of example 14, further comprising: obtaining configuration information for the first tool, wherein the configuration information comprises a specification that describes an action the first tool is capable of performing with respect to the first data source system; and invoking, by the AI agent, the first tool based on the configuration information.

Example 18. The method of example 17, further comprising: processing the specification to obtain the action the first tool is capable of performing with respect to the first data source system; and generating, based on the action the first tool is capable of performing with respect to the first data source system and the query, the execution plan to include the invoking of the first tool to perform the first action.

Example 19. The method of example 14, wherein the task comprises optimizing, on the second data source system, backups of data associated with the user and stored on the first data source system.

Example 20. Non-transitory computer-readable media comprising instructions that, when executed by processing circuitry, cause the processing circuitry to: generate, with an artificial intelligence (AI) agent applying a machine learning model, based on a query associated with a user, an execution plan for a task to satisfy the query, wherein the execution plan includes actions to be performed with respect to a first data source system and a second data source system, and wherein the user has permission for each of the actions; invoke, by the AI agent, a first tool to perform a first action of the actions with respect to the first data source system, wherein the AI agent is trained to use the first tool; and invoke, by the AI agent, a second tool to perform a second action of the actions with respect to the second data source system, wherein the AI agent is trained to use the second tool.

## Claims

1. A method comprising:
receiving, by a computing system, a query for processing by an artificial intelligence (AI) agent, the query comprising a request for performance of a task associated with a first data source system and a second data source system;
generating, with the AI agent, based on the query, an execution plan for the task to satisfy the query, wherein the execution plan includes actions to be performed with respect to the first data source system and the second data source system, and wherein a user associated with first data source system and the second data source system has permission for each of the actions;
invoking, by the AI agent, a first tool to perform a first action of the actions with respect to the first data source system; and
invoking, by the AI agent, a second tool to perform a second action of the actions with respect to the second data source system.

2. The method of claim 1, further comprising:
obtaining configuration information for the first tool, wherein the configuration information specifies at least one of:
a scope of calls to the first data source system; and
a manner in which the first tool is to access data from the first data source system; or
the configuration information comprises a specification that describes an action the first tool is capable of performing with respect to the first data source system; and invoking, by the AI agent, the first tool based on the configuration information.

3. The method of claim 2, wherein the configuration information comprises the specification, the method further comprising:
processing the specification to obtain the action the first tool is capable of performing with respect to the first data source system; and
generating, based on the action the first tool is capable of performing with respect to the first data source system and the query, the execution plan to include the invoking of the first tool to perform the first action.

4. The method of any preceding claim, wherein the task comprises optimizing, on the second data source system, backups of data associated with the user and stored on the first data source system.

5. The method of any preceding claim, wherein the task comprises modifying, on the second data source system, security data associated with the user that is stored on the first data source system or on the second data source system.

6. The method of any preceding claim, wherein the first action comprises obtaining dynamic data from the first data source system.

7. The method of any preceding claim, further comprising:
authenticating, by a data access proxy layer, the first tool to the first data source system to enable the first tool to perform the first action, and
optionally, the method comprises:
authenticating, based on credentials for the user, the first tool to the first data source system, wherein to authenticate the first tool to the first data source system.

8. The method of any preceding claim, comprising:
selecting, by the AI agent and based on a determination that the user has permission to perform a particular action that the first tool is capable of performing with respect to the first data source system, the actions of the execution plan to include the particular action, wherein to generate the execution plan.

9. The method of any preceding claim, wherein the first data source system and the second data source system are diverse.

10. The method of any preceding claim, wherein the first and second tool are invoked concurrently.

11. The method of any preceding claim, wherein the first tool is configured to interface with the first data source system and not the second data source system, the second tool is configured to interface with the second data source system and not the first data source system, and wherein the method further comprises:
selecting, based on the query, the first and second tools from a plurality of tools.

12. A computing system comprising:
one or more storage devices; and
processing means having access to the one or more storage devices and configured to:
receive, a query for processing by an artificial intelligence (AI) agent, the query comprising a request for performance of a task associated with a first data source system and a second data source system;
generate, with the AI agent, based on the query, an execution plan for the task to satisfy the query, wherein the execution plan includes actions to be performed with respect to the first data source system and the second data source system, and wherein a user associated with the first data source system and the second data source system has permission for each of the actions;
invoke, by the AI agent, a first tool to perform a first action of the actions with respect to the first data source system; and
invoke, by the AI agent, a second tool to perform a second action of the actions with respect to the second data source system.

13. The computing system of claim 12, wherein the processing means is configured to:
obtain configuration information for the first tool, wherein the configuration information specifies at least one of:
a scope of calls to the first data source system; and
a manner in which the first tool is to access data from the first data source system; or
the configuration information comprises a specification that describes an action the first tool is capable of performing with respect to the first data source system; and invoke, by the AI agent, the first tool based on the configuration information.

14. The computing system of claim 12 or claim 13, wherein the task comprises optimizing, on the second data source system, backups of data associated with the user and stored on the first data source system.

15. One or more computer-readable media comprising instructions that, when executed by processing means, cause the processing means to perform the method according to any of claims 1 to 11.
